# EUROPÄISCHE PATENTSCHRIFT

(11) **EP 1 279 867 B1**
(45) Veröffentlichungstag und Bekanntmachung des Hinweises auf die Patenterteilung: **14.09.2005**
(21) Anmeldenummer: 02000580.7
(22) Anmeldetag: 10.01.2002
(51) Int. Cl.: F16H 48/00, F16H 1/22, F16H 37/06

(54) **Getriebe mit Leistungsaufteilung**
Power-split-transmission
Transmission à division de puissance

(30) Priorität: 18.07.2001 DE 10134245
(43) Veröffentlichungstag der Anmeldung: 29.01.2003
(73) Patentinhaber: Winergy AG, 46562 Voerde (DE)
(72) Erfinder: Hulshof, Frans, 7102 KW-Winterswijk (NL)
(74) Vertreter: Radünz, Ingo

(56) Entgegenhaltungen:
- DE-A- 4 343 484
- DE-A- 19 514 361
- DE-A- 19 917 605
- DE-C- 762 696

## Beschreibung

Die Erfindung betrifft ein Getriebe mit einer inneren Leistungsaufteilung mit den Merkmalen des Oberbegriffes des Anspruches 1, und wie es aus dem DE 19514361A bekannt ist.

Es sind Aufsteckgetriebe mit innerer Leistungsverzweigung in der Form einer Planetenstufe oder mit einem sich axial frei einstellbarem Zahnrad mit Doppelschrägverzahnung bekannt, wobei das Getriebe in der Regel eine An- und eine Abtriebswelle hat. Solche Aufsteckgetriebe, die unter anderem zum Antrieb von Generatoren durch Rotoren von Windkraftanlagen verwendet werden, werden meist durch einen Pressverband mit der Rotorwelle verbunden. Bei dieser bekannten Ausführungsart ist die Nabe des Pressverbandes in den meisten Fällen Bestandteil eines Planetenträgers und im Getriebegehäuse gelagert. Die Planetenräder des umlaufenden Planetenträgers wälzen sich auf einem gehäusefesten Zahnrad mit Innenverzahnung ab und kämmen gleichzeitig mit einem Sonnenrad, durch das die Leistungen summiert werden. Solche Planetenstufen können 3, 4, 5 oder sogar 6 Planetenräder enthalten. Von der Sonnenradwelle dieser ersten Stufe wird die Leistung entweder über eine weitere Planetenstufe mit nachgeschalteter Stirnradstufe oder über zwei in Serie stehenden Stirnradstufen, jeweils in einfach schrägverzahnter Ausführung, umgewandelt und in einen Generator abgetrieben.

Die bekannten Getriebeanordnungen sind für höhere Leistungsklassen zu komplex, zu schwer und unterliegen infolge der großen Abmessungen in Kombination mit den hohen umzuwandelnden Drehmomenten großen Verformungen und hieraus entstehenden ungleichmäßigen Lastverteilungen. Sie weisen große Baulängen auf. Außerdem können im Falle einer Getriebereparatur auf dem Turm einer Windkraftanlage in der Regel keine verzahnten Teile und Lager der Planetenstufe ausgewechselt werden. Eine Demontage des kompletten Getriebes oder großer Baugruppen eines Getriebes erfordern vor allem bei Offshore-Aufstellung sehr teure Krankapazitäten. Ein weiterer Nachteil ist, dass mit größer werdenden Getrieben und 4poligen Generatoren im 60Hz-Betrieb es immer schwieriger wird, mit handelsüblichen Wälzlagern ausreichende Lagerlebensdauerwerte für die hochtourigen Wellen zu realisieren, ohne die von den Lagerherstellern angegebenen maximalen Drehzahlen zu überschreiten.

Der Erfindung liegt die Aufgabe zugrunde, das gattungsgemäße Getriebe derart weiter zu entwickeln, dass ein kompakter und leichter Aufbau entsteht, der außerdem einfach zu montieren und demontieren ist.

Die Aufgabe wird bei einem gattungsgemäßen Getriebe erfindungsgemäß durch die kennzeichnenden Merkmale des Anspruches 1 gelöst. Vorteilhafte Ausgestaltungen der Erfindung sind Gegenstand der Unteransprüche.

Das Getriebe kann sowohl als Übersetzungs- wie auch als Untersetzungsantrieb eingesetzt werden. Das Getriebe hat bei einer Übersetzung ins Schnelle eine Antriebswelle und zwei Abtriebswellen. Bei einer Untersetzung ins Langsame treiben zwei Motoren über zwei Eingangswellen eine Abtriebswelle an. Das Getriebe, das vorzugsweise als Aufsteckgetriebe ausgeführt wird, wird bei einer Übersetzung ins Schnelle bevorzugt für den Antrieb von Windgeneratoren eingesetzt. Für diesen Einsatzfall bringt das erfindungsgemäße Getriebe die größten Vorteile. Bei einer Untersetzung ins Langsame kann das erfindungsgemäße Getriebe beispielsweise für den Antrieb von Rohrmühlen oder von Schneidköpfen von Baggern verwendet werden.

Durch die besondere Lage der einzelnen Wellen zueinander entsteht ein symmetrisches Getriebe mit einem Schwerpunkt in der Hauptachse. Bis auf zwei mit dem Großzahnrad verbundene Ritzelwellen lassen sich alle Räder und Lager in ein Getriebegehäuse mit drei Gehäuseteilfugen einlegen und montieren. Bei einer Verwendung des Getriebes in einer Windkraftanlage ist damit eine fast komplette Demontage oder ein fast kompletter Austausch von Teilen auf dem Turm der Windkraftanlage unter Verwendung von geringer Krankapazität möglich.

Durch die erfindungsgemäße Leistungsaufteilung und Räderanordnung wird das Großzahnrad bezüglich der Tragfähigkeit der Zähne und damit für die Drehmomentumwandlung optimal genutzt.

Durch die Anordnung der Wälzlager der acht mit dem Großzahnrad verbundenen Ritzelwellen in zwei parallelen und miteinander verdrehsteif verbundenen Gehäusewänden, die gleichzeitig als Drehmomentstütze ausgeführt werden, entsteht ein sehr verwindungssteifes Getriebe, wobei nicht die nachteiligen Verformungen eines Planetengetriebes gegeben sind.

Die Erfindung lässt einen optimalen Zugang zu allen Lagerstellen und Zahneingriffen zwecks Schmierung und einer Temperaturüberwachung an den Lagerstellen zu.

Durch den Wiederholcharakter vieler Innenteile des Getriebes ist eine kostengünstige Fertigung mit anteilig geringen Rüstkosten und eine kostengünstige Ersatzteilhaltung gegeben.

Die Position der schnelllaufenden Abtriebswellen ist so gewählt, dass die beiden Generatoren der Windkraftanlage optimal nebeneinander passen. Der Abstand der Generatoren ist anpassbar.

Das Getriebe ermöglicht im Gegensatz zu einem Planetengetriebe eine Schrumpfscheibe zur Übertragung der Drehmomente der Rotorwelle in der Getriebehohlwelle sowohl auf der Abtriebsseite wie auf der Antriebsseite des Getriebes. Bei einer Anordnung der Schrumpfscheibe auf der Abtriebsseite, die bei einem Planetengetriebe nicht möglich ist, entsteht die kürzeste Baulänge.

Bei dem erfindungsgemäßen Antriebskonzept ist es möglich, das Getriebe als Aufsteckgetriebe einer separat zweifach gelagerten Rotorwelle oder gleichzeitig auch als zweites Lager der Rotorwelle wie bisher oft üblich einzusetzen. Als Aufsteckgetriebe ohne Lagerbock-Funktion kann das Getriebe auch zwischen den Rotorlagern angeordnet werden. Dies hat den Vorteil, dass große Lagerabstände bei der Rotorwelle möglich sind.

Eine Bohrung für Steuerleitungen zur Blattverstellung des Rotors der Windkraftanlage kann direkt in die Rotorwelle eingebracht werden, so dass eine besondere Rohrleitung, wie das bisher übliche, für die Blattverstellung verwendete Pitchrohr entfallen kann.

Bei einem Ausfall eines Generators ist das Getriebe immer noch voll funktionsfähig, weil die Leistungssummierung der einzelnen Getriebesträngen unabhängig voneinander stattfindet.

Durch die Leistungsverzweigung und/oder Leistungssummierung mittels zweier axial frei gelagerter hochtouriger Abtriebswellen mit Doppelschrägverzahnung sind die Wellenabmessungen kleiner als bei einem Mono-Generatorantrieb. Wegen der fehlenden Axiallagerung der Wellen lassen sich auch bei sehr hohen Überdrehzahlen für diese Wellen noch handelsübliche Wälzlager finden, die eine für diese Einsatzfälle ausreichende rechnerische Lagerlebensdauer bringen.

Mehrere Ausführungsbeispiele der Erfindung sind in der Zeichnung dargestellt und werden im Folgenden näher erläutert. Es zeigen:
- Fig. 1: die perspektivische Ansicht eines Getriebes für eine Windkraftanlage von der Rotorseite des Getriebes aus,
- Fig. 2: die perspektivische Ansicht des Getriebes nach Fig. 1 von der Generatorseite des Getriebes aus,
- Fig. 3: die perspektivische Ansicht des Getriebes von vorne,
- Fig. 4: einen Schnitt durch die Abtriebswelle des Getriebes zum Generator,
- Fig. 5.: die Seitenansicht des Getriebe nach Fig. 1 von der Rotorseite des Getriebes aus,
- Fig. 6: die Seitenansicht des Getriebes nach Fig. 1 von der Generatorseite des Getriebes aus,
- Fig. 7: die Seitenansicht eines anderen Getriebes von der Generatorseite des Getriebes aus,
- Fig. 8: die Draufsicht auf Fig. 7 in Richtung A,
- Fig. 9: die Seitenansicht des Getriebegehäuses,
- Fig. 10: eine teilweise Draufsicht auf Fig. 9 und
- Fig. 11: den Schnitt durch die Ausgangswelle eines Getriebes gemäß einer anderen Ausführungsform.

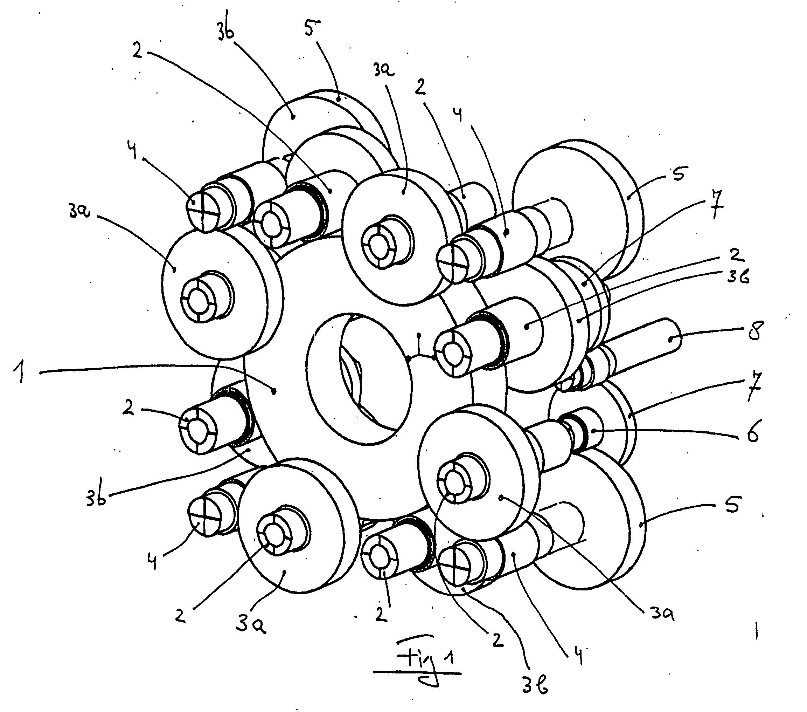

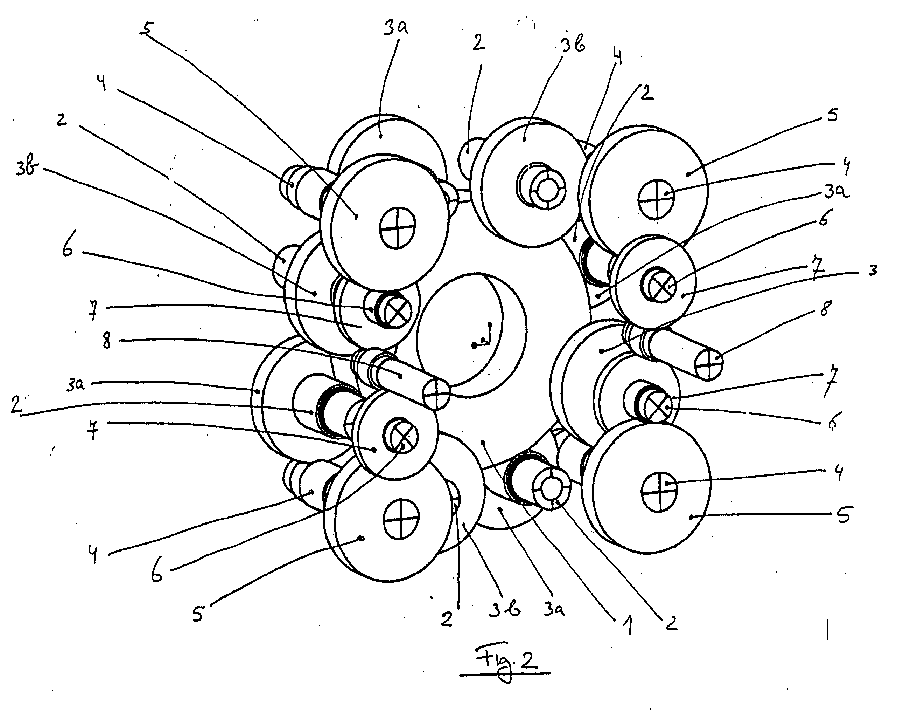

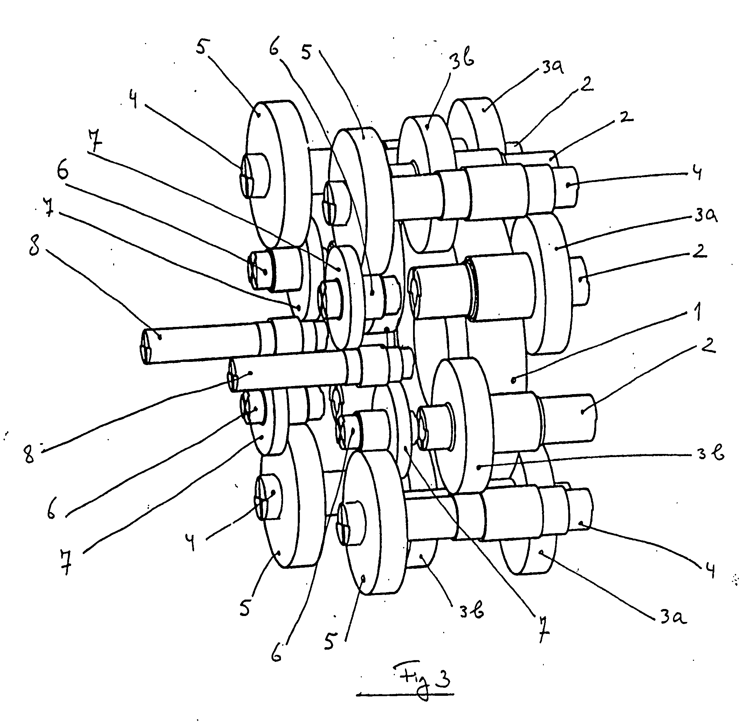

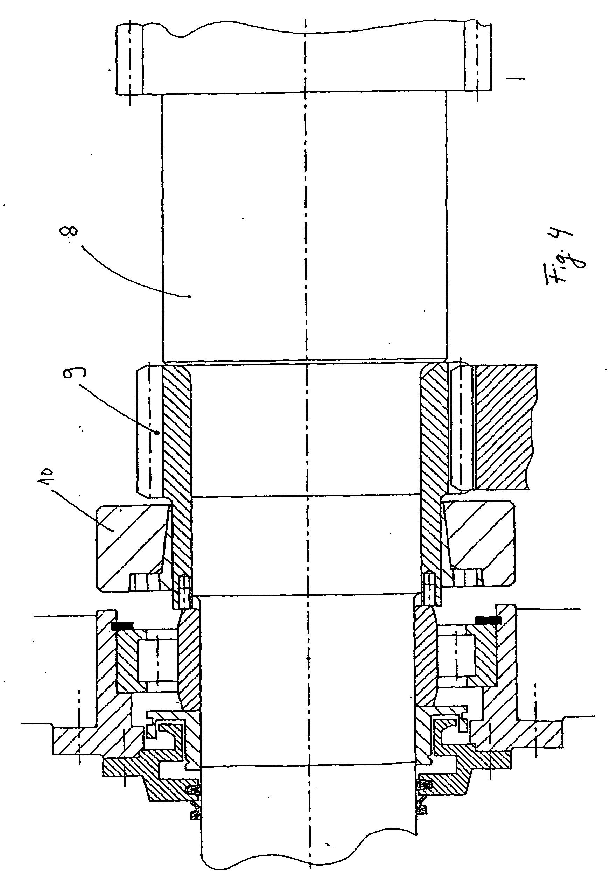

Das dargestellte Getriebe ist ein Aufsteckgetriebe, dient als Übersetzungsgetriebe in einer Windkraftanlage zum Antrieb von z. B. zwei Generatoren (Fig. 1 bis 6) durch einen Rotor und ist auf dem Turm der Windkraftanlage zwischen dem Rotor und den Generatoren angeordnet. Das Getriebe enthält ein außenverzahntes Großzahnrad 1. Das Großzahnrad 1 ist drehfest auf einer Hohlwelle befestigt, die zweiseitig in einem das Getriebe umgebenden Getriebegehäuse gelagert und mit einer Eingangswelle, der Rotorwelle des Rotors verbunden ist.

Um das Großzahnrad 1 sind symmetrisch acht Ritzelwellen 2 angeordnet, deren Zahnritzel mit dem Großzahnrad 1 in Eingriff stehen. Die Lager der Ritzelwellen 2 sind in zwei gegenüberliegende Gehäusewänden des Getriebegehäuse eingesetzt. Durch diese symmetrische Anordnung der Ritzelwellen 2 ist die Lagerung der das Großzahnrad tragenden Hohlwelle, abgesehen von dem Eigengewicht des Großzahnrades 1 und der Hohlwelle, bei einer gleichmäßigen Belastung der Generatoren frei von Radialkräften.

Auf jeder Ritzelwelle 2 ist ein Zahnrad 3a oder 3b befestigt. Zwei Zahnräder 3a, 3b bilden jeweils ein Zahnradpaar und sind wechselseitig vor oder hinter dem Großzahnrad 1 angeordnet. Die Zahnräder 3a und 3b weisen eine Schrägverzahnung auf, die je nach ihrer Anordnung vor und hinter dem Großzahnrad 1 einmal links- und einmal rechtssteigend ist.

Die ein Zahnradpaar bildenden Zahnräder 3a und 3b der Ritzelwellen 2 kämmen mit einem Zahnritzel einer gemeinsamen Ritzelwelle 4, die doppelschrägverzahnt und axial frei gelagert ist. Diese axiale Bewegungsfreiheit sorgt dafür, dass die Mahlkräfte aus den Zahneingriffen der Schrägverzahnungen gleich groß sind, so dass auch die Drehmomente in den Ritzelwellen 2 gleich groß sind. Diese vier gemeinsamen Ritzelwellen 4 bilden zusammen mit den acht um das Großzahnrad 1 angeordneten Ritzelwellen 2 eine erste Stufe, in der eine erste Leistungssummierung stattfindet. Bei dieser ersten Leistungssummierung wird die Leistung der acht Ritzelwellen 2 gleichmäßig in die vier gemeinsamen Ritzelwellen 4 umgewandelt.

Die vier gemeinsamen Ritzelwellen 4 tragen je ein Zahnrad 5, das jeweils mit einer weiteren Ritzelwelle 6 kämmt und diese antreibt, um eine weitere Steigerung der Drehzahl zu erzeugen. Die vier Ritzelwellen 6 tragen je ein Zahnrad 7, das fest mit der Ritzelwelle 6 verbunden und mit einer Schrägverzahnung versehen ist. Die Schrägverzahnungen der Zahnräder 7 weisen eine unterschiedliche Steigungsrichtung auf, die je nach der Anordnung der Zahnräder 7 im Getriebe links- oder rechtssteigend ausgeführt ist. Jeweils zwei Zahnräder 7 mit einer unterschiedlichen Steigungsrichtung der Schrägverzahnung bilden ein Zahnradpaar, das jeweils mit einem Zahnritzel einer gemeinsamen Ausgangsritzelwelle 8 kämmt. Diese zwei Ausgangsritzelwellen 8 sind bei der in Fig. 1 dargestellten Ausführungform des Getriebes mit jeweils einem der beiden Generatoren verbunden. Die Ausgangsritzelwellen 8 sind ebenso wie die Ritzelwellen 4 mit einer Doppelschrägverzahnung ausgeführt und axial frei gelagert. Die vier Ritzelwellen 6 bilden zusammen mit den zwei Ausgangsritzelwellen 8 eine zweite Stufe, in der eine weitere Summierung und Umwandlung der Leistung stattfindet. Die gesamte auf das Großzahnrad 1 von dem Rotor übertragene Leistung ist jetzt in zwei Wellen, den Ausgangsritzelwellen 8, konzentriert und kann so in die beiden Generatoren weiter geleitet werden.

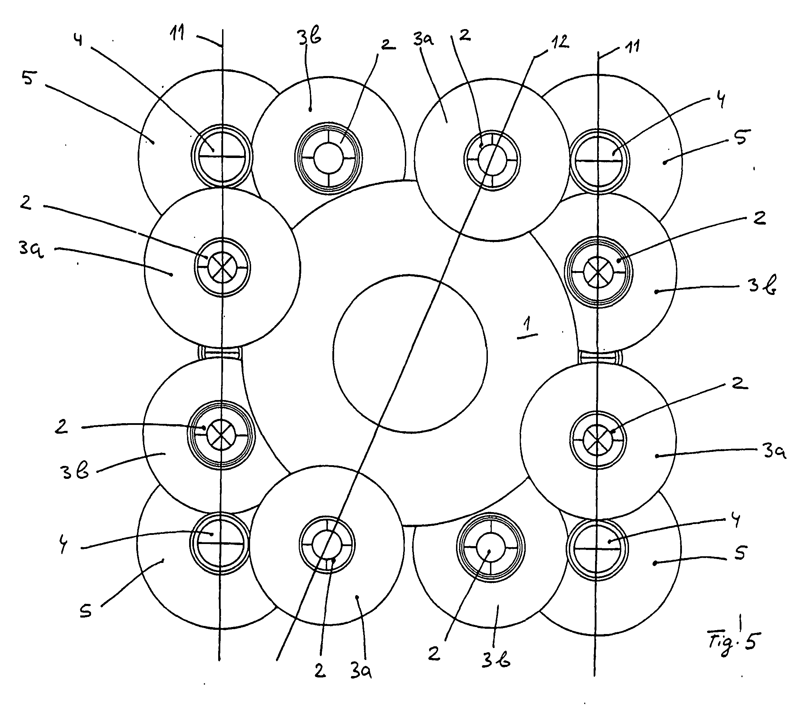

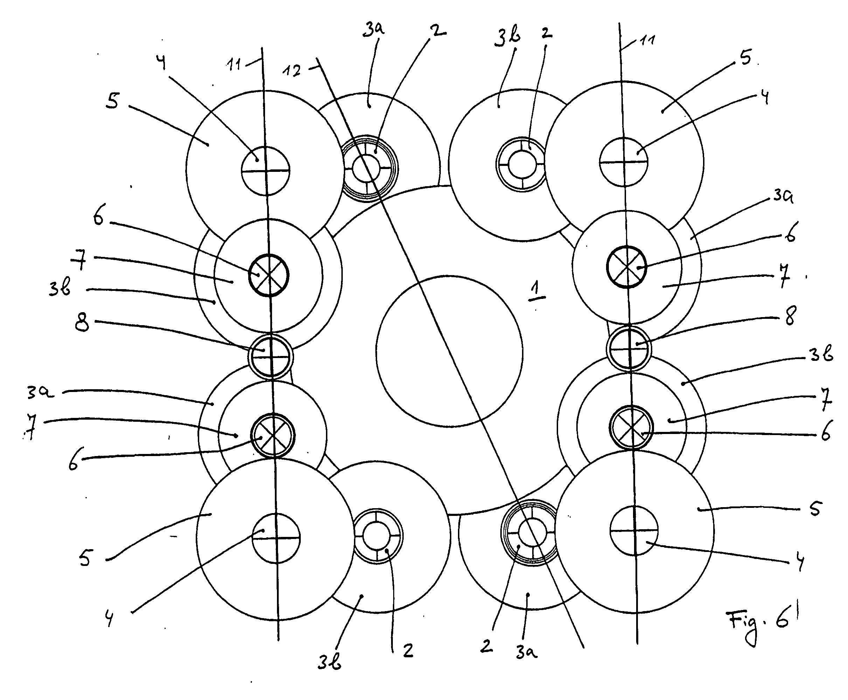

Die Räder und Wellen des beschriebenen Getriebes sind in einem Getriebegehäuse gelagert, das vorzugsweise durch zwei parallele Teilfugen 11 und eine schräg verlaufende Teilfuge 12 in vier Gehäuseteile geteilt ist. Diese Teilfugen sind in den Fig.5 und 6 durch gerade Linien angedeutet. In dem Getriebegehäuse sind beiderseits der vertikalen Teilfugen 11 vier der acht Ritzelwellen 2 der ersten Stufe, die vier gemeinsamen Ritzelwellen 4 der ersten Stufe, die vier Ritzelwellen 6 der zweiten Stufe und die beiden Ausgangsritzelwellen 8 gelagert. Das Großzahnrad 1 und weitere zwei der acht Ritzelwellen 2 der ersten Stufe liegen beiderseits der schrägen Teilfuge 12. Alle diese Wellen und Räder lassen nach einem Öffnen des Getriebegehäuse längs den Teilfugen 11, 12 radial herausnehmen. Das kann auf dem Turm der Windkraftanlage ohne große Krankapazität erfolgen. Lediglich zwei der acht Ritzelwellen 2 , die auf der dem Generator zugewandten Seite des Großzahnrades 1 angeordnet sind, liegen nicht in einer der Teilfugen 11, 12. Diese beiden Ritzelwellen 2 können daher nicht radial entnommen werden und müssen axial ausgebaut werden.

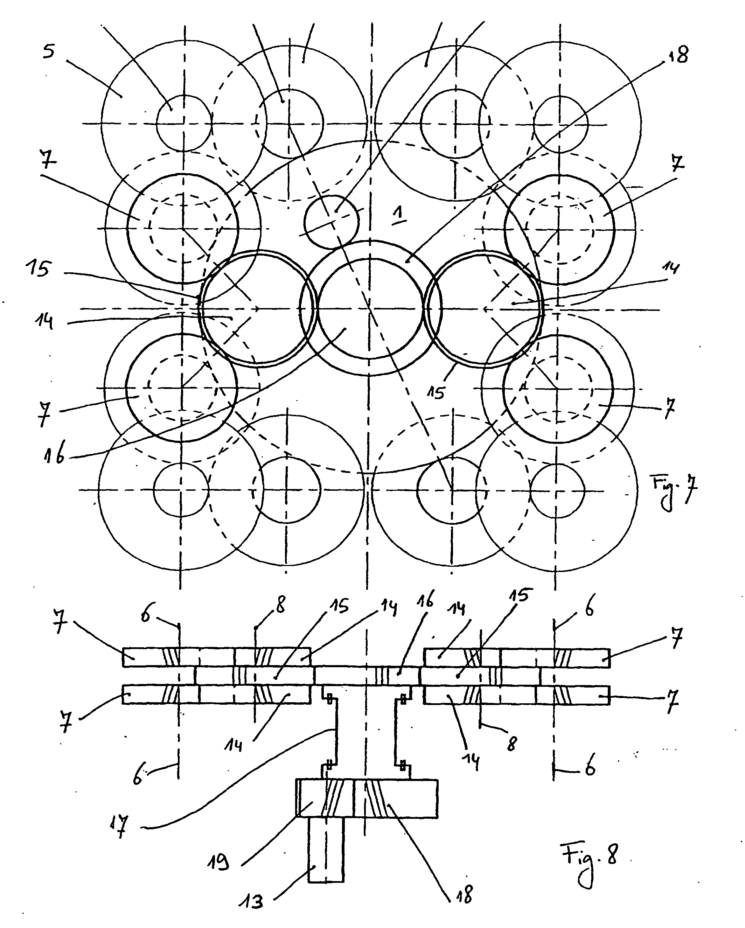

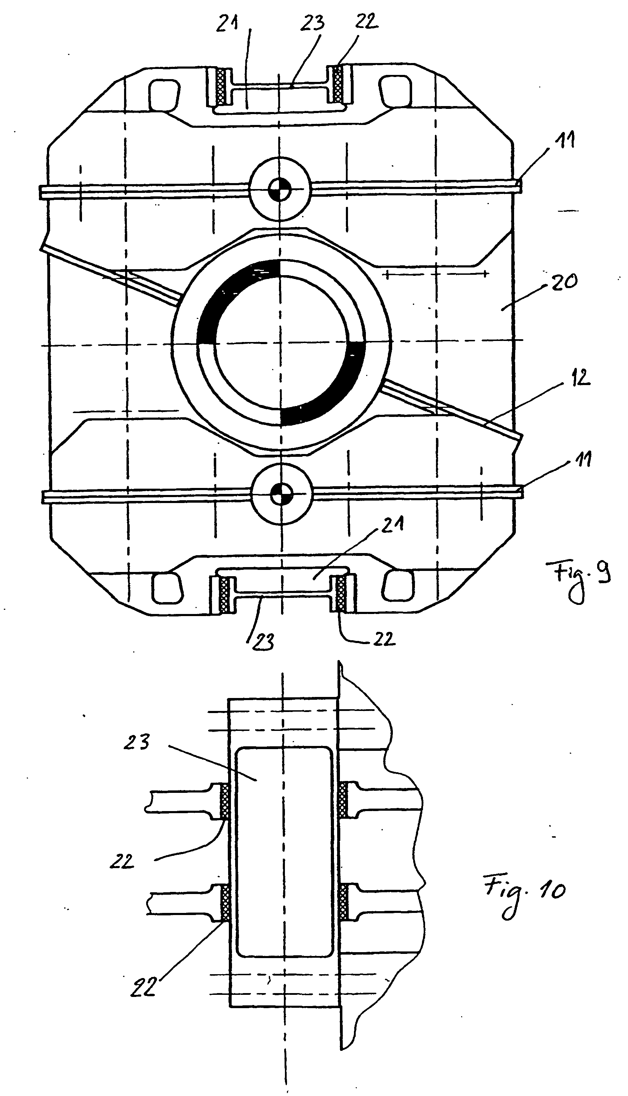

Bei der in den Fig. 7 und 8 dargestellten Ausführungsform eines Getriebes schließt sich an die beiden Ausgangsritzelwellen 8 eine dritte Stufe der Leistungsverzweigung auf eine einzige Ausgangswelle 13 an. Hierzu sind auf jeder Ausgangsritzelwelle 8 ein Zahnrad 14, das jeweils in ein Zahnrad 7 der Ritzelwellen 6 eingreift, und ein Zahnrad 15 angeordnet. Diese Zahnräder 15 stehen mit einem Zahnrad 16 in Eingriff, das schwimmend zwischen ihnen angeordnet und allein durch die Zahneingriffe gehalten ist. Dieses Zahnrad 16 ist über eine drehstarre Winkelausgleichskupplung 17 mit einen Zahnrad 18 verbunden. Dieses Zahnrad 18 greift in ein Zahnritzel 19 ein, das auf der einzigen Ausgangswelle 13 dieses Getriebes drehfest befestigt ist. Diese Ausgangswelle 13 ist in dem Getriebegehäuse gelagert und mit dem Generator gekoppelt.

Durch einen Ölpressverband zwischen der Ritzelwelle 2 und dem Zahnrad 3a oder 3b können die Zahnräder 3a, 3b zur Einstellung stufenlos zueinander verdreht werden. Auf diese Weise können die Zahnflanken dieser Zahnräder 3a, 3b problemlos mit dem jeweiligen Gegenstück bei der richtigen axialen Lage zum Eingriff gebracht werden. Dies ist eine bekannte technische Praxis, auf die hier zurückgegriffen werden kann. Mittels dieser Technik lassen sich auch die nicht in einer Teilfuge 11, 12 liegenden Ritzelwellen 2 und die Zahnräder 3a, 3b fügen und trennen.

Bei den Ausgangsritzelwellen 8 wird eine Zahnradhälfte 9 mittels Schrumpfscheibe 10 mit der Ausgangsritzelwelle 8 verbunden, so dass auch hier eine stufenlose Einstellung möglich ist. Hierdurch lässt sich auch die Ausgangsritzelwelle 8 und ihre Lagerung ohne eine Trennung von Teilfugen 11, 12 aus dem Getriebe demontieren.

Die Verbindung des Großzahnrades 1 mit der Rotorwelle kann direkt mittels eines hydraulisch demontierbaren Schrumpfsitz oder mittels Tangentkeile erfolgen. Der Sitz kann zylindrisch oder kegelig sein. Hierbei sind die Getriebehauptlager direkt auf der Rotorwelle aufgesetzt. Eine montagemäßig freundlichere Verbindung ist eine indirekte Verbindung des Zahnrades 1 mit der Rotorwelle mittels einer zum Getriebe gehörenden Hohlwelle die fest mit dem Großzahnrad 1 verbunden ist. Die Drehmomentübertragung zwischen Hohlwelle und Rotorwelle kann wieder mittels Schrumpfsitz, Tangentkeile oder mittels zusätzlicher Schrumpfscheibe erfolgen.

Die einander gegenüberliegenden und verdrehsteif miteinander verbundenen Gehäusewände 20 des Getriebegehäuses nehmen die Lagerung der das Großzahnrad 1 umgebenden Ritzelwellen 2 auf und sind als Drehmomentstützen ausgebildet. Zu diesem Zweck sind seitlich an den Enden der Gehäusewände 20 Aussparungen 21 vorgesehen. In diesen seitlich offenen Aussparungen 21 sind über vorgespannte Gummielemente 22 abgestützte Kupplungsstücke 23 spielfrei und federnd angeordnet, die mit einem separaten Grundrahmen lösbar verbunden sind. Nach einer Demontage der Kupplungsstücke 23 lässt sich das Getriebe bei zweifach abgestützter Rotorwelle um 360° um die Hauptachse des Getriebe drehen.

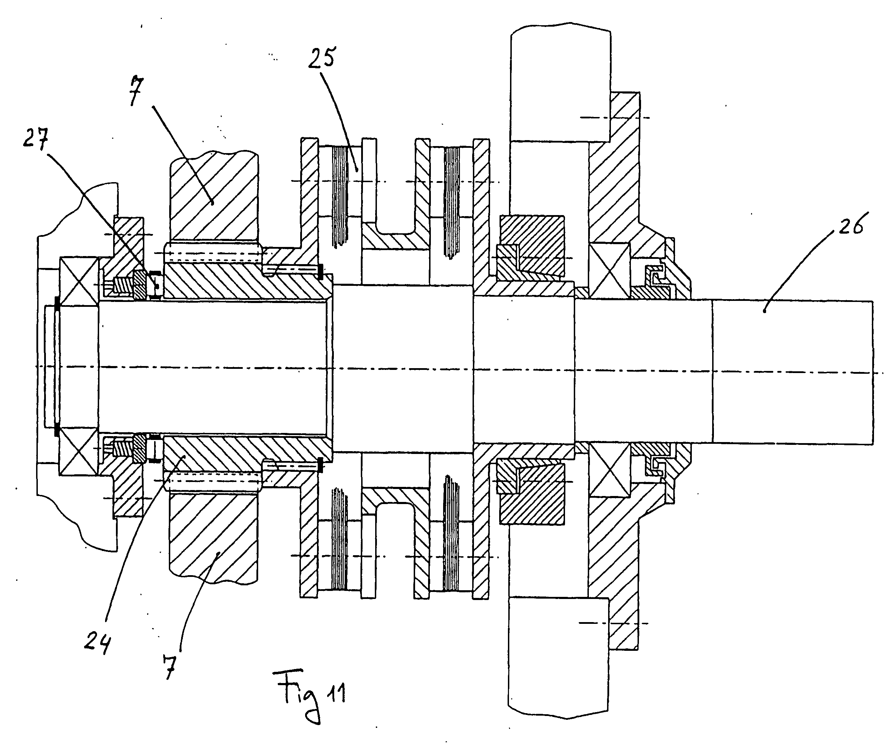

Bei der in Fig. 11 gezeigten Ausführungsform stehen die beiden zu einen Zahnradpaar gehörenden Zahnräder 7, die sowohl geradverzahnt als auch schrägverzahnt sein können, mit einem radial nicht gelagerten Ritzel 24 in Eingriff. Das Ritzel 24 ist über eine doppelgelenkige Kupplung 25 mit einer Ausgangswelle 26 verbunden. Damit ein Lastausgleich gegeben ist, sind die Zahnräder 7 jedes Zahnradpaares bezogen auf das Achsenkreuz des Ritzels 24 um 180° zueinander versetzt. Hierdurch ist die Summe aller Kräfte für das Ritzel 24 gleich null. Die beiden Zahneingriffe und die schwimmende Anordnung des Ritzels 24 sorgen bei ausreichendem Radialspiel und Zahnspiel dafür, dass das Ritzel 24 einem Kräfteausgleich und nur eingeschränkten minimalen Verlagerungen, die durch Teilungs- und Rundlauffehler der Zahnräder im Antriebsstrang bedingt sind, ausgesetzt ist. Das Ritzel 24 kann daher den Eingriff nicht verlassen und außer Kontrolle geraten. Bei einem schrägverzahnten Ritzel 24 und entsprechend schrägverzahnten Zahnrädern 7 werden die Axialkomponenten der Zahnkräfte, die in der gleichen Richtung wirken, über ein diese Bewegung des Ritzels 24 nur minimal hemmendes Axiallager 27 abgestützt.

## Patentansprüche

1. Getriebe mit einer inneren Leistungsaufteilung bestehend aus einem mit einer Eingangswelle bzw. Ausgangswelle verbundenen und mit einer Außenverzahnung versehenen Großzahnrad (1), das von mehreren Ritzelwellen (2) umgeben ist, deren Zahnritzel mit dem Großzahnrad (1) kämmen, wobei die Ritzelwellen (2) je ein Zahnrad (3a, 3b) tragen und zwei Zahnräder (3a, 3b) jeweils ein Zahnradpaar bilden und wechselweise vor und hinter dem Großzahnrad (1) angeordnet, mit einer Schrägverzahnung von unterschiedlicher Steigungsrichtung versehen sind und mit einer gemeinsamen, doppelschrägverzahnten, axial frei gelagerten Ritzelwelle (4) in Eingriff stehen, **dadurch gekennzeichnet,**
- **dass** das Großzahnrad (1) von acht Ritzelwellen (2) umgeben ist, deren Zahnräder (3a, 3b) mit vier jeweils einem Zahnradpaar gemeinsamen, doppelschrägverzahnten, axial frei gelagerten Ritzelwellen (4) in Eingriff stehen und mit diesen eine erste Stufe der Leistungsaufteilung bilden,
- **dass** die vier Ritzelwellen (4) der ersten Stufe der Leistungsaufteilung mit vier Ritzelwellen (6) einer zweiten Stufe der Leistungsaufteilung in Verbindung stehen,
- **dass** die vier Ritzelwellen (6) der zweiten Stufe der Leistungsaufteilung wiederum je ein Zahnrad (7) tragen und zwei Zahnräder (7) ein Zahnradpaar bilden
- und die Zahnräder (7) eines Zahnradpaares mit zwei jeweils einem Zahnradpaar gemeinsamen, frei gelagerten Ritzelwellen in Eingriff stehen.

2. Getriebe nach Anspruch 1, **dadurch gekennzeichnet, dass** in der zweiten Stufe der Leistungsaufteilung die Zahnräder (7) eines Zahnradpaares mit einer Schrägverzahnung von unterschiedlicher Steigungsrichtung versehen sind und mit zwei jeweils einem Zahnradpaar gemeinsamen doppelschrägverzahnten, axial frei gelagerten Ritzelwellen in Eingriff stehen, die als Ausgangswellen (8) bzw. Eingangswellen dienen.

3. Getriebe nach Anspruch 1, **dadurch gekennzeichnet, dass** in der zweiten Stufe der Leistungsaufteilung die Zahnräder (7) eines Zahnradpaares mit zwei jeweils einem Zahnradpaar gemeinsamen, radial frei gelagerten Ritzeln (24) in Eingriff stehen, dass die Zahnräder (7) eines Zahnradpaares bezogen auf das Achsenkreuz des Ritzels (24) um 180° versetzt zueinander angeordnet sind und dass das Ritzel (24) über eine doppelgelenkige Kupplung (25) mit einer Ausgangswelle (26) verbunden sind.

4. Getriebe nach Anspruch 3, **dadurch gekennzeichnet, dass** die Zahnräder (7) und das ihnen zugeordnete Ritzel (24) schräg verzahnt sind und dass das Ritzel (24) über ein geringfügig hemmendes Axiallager (27) abgestützt ist.

5. Getriebe nach einem der Ansprüche 1 bis 4, **dadurch gekennzeichnet, dass** zwischen der ersten und der zweiten Stufe der Leistungsaufteilung eine Stirnradstufe (Zahnräder 5) zur Drehzahländerung angeordnet ist.

6. Getriebe nach einem der Ansprüche 1 bis 5, **dadurch gekennzeichnet, dass** Großzahnrad (1) mit der Rotorwelle des Rotors einer Windkraftanlage verbunden ist und dass die zwei Ausgangswellen (8) mit jeweils einem Generator verbunden sind.

7. Getriebe nach einem der Ansprüche 1 bis 6, **dadurch gekennzeichnet, dass** das Getriebe in einem durch zwei parallele Teilfugen (11) und eine schräg verlaufende Teilfuge (12) geteilten Getriebegehäuse untergebracht ist und dass beiderseits der parallelen Teilfugen (11) vier der acht Ritzelwellen (2) der ersten Stufe, die vier gemeinsamen Ritzelwellen (4) der ersten Stufe, die vier Ritzelwellen (6) der zweiten Stufe und die beiden Ausgangswellen (8) und beiderseits der schrägen Teilfuge (12) das Großzahnrad (1) und weitere zwei der acht Ritzelwellen (2) der ersten Stufe gelagert sind.

8. Getriebe nach einem der Ansprüche 1 bis 7, **dadurch gekennzeichnet, dass** die Ausgangsritzelwellen (8) über eine dritte Stufe der Leistungsverzweigung mit einer einzigen Ausgangswelle (13) in Eingriff stehen.

9. Getriebe nach Anspruch 8, **dadurch gekennzeichnet, dass** auf den Ausgangsritzelwellen (8) jeweils ein Zahnrad (14) angeordnet ist, in das jeweils ein Zahnrad (7) der Ritzelwelle (6) eingreift, dass auf jeder Ausgangsritzelwelle (8) ein Zahnrad (15) angeordnet ist, dass zwischen diesen Zahnrädern (15) auf den Ausgangsritzelwellen (8) schwimmend ein Zahnrad (16) angeordnet ist, dass das schwimmend angeordnete Zahnrad (16) über eine drehstarre Winkelausgleichskupplung (17) mit einem Zahnrad (18) drehstarr und winkelbeweglich verbunden ist und dass dieses Zahnrad (18) in ein Zahnritzel (19) eingreift, das auf der Ausgangswelle (13) angeordnet ist, die in dem Getriebegehäuse gelagert ist.

10. Getriebe nach einem der Ansprüche 1 bis 9, **dadurch gekennzeichnet, dass** die Lagerung der das Großzahnrad (1) umgebenden Ritzelwellen (2) in zwei gegenüberliegenden Gehäusewänden (20) eines das Getriebe umgebenden Getriebegehäuse angeordnet ist, dass die Gehäusewände (20) als Drehmomentstützen ausgebildet sind und seitlich an den Enden Aussparungen (21) aufweisen, in denen spielfrei und demontierbar Kupplungsstücke (23) angeordnet sind, die mit einem separaten Grundrahmen verbunden sind.

## Claims

1. Gear unit with internal power distribution comprising a large gear (1), connected with an input shaft or an output shaft, respectively, and provided with external gear toothing, which is surrounded by various pinion shafts (2) whose toothed pinions intermesh with large gear (1) wherein each of said pinion shafts (2) carries one gear (3a, 3b) and two gears (3a, 3b) form a gear pair, respectively and are alternately placed before and behind large gear (1), and are provided with a helical gearing of different pitch direction and mesh with a common, double helically geared, axially freely supported pinion shaft (4),
**characterized in**
- **that** said large gear (1) is surrounded by eight pinion shafts (2) whose gears (3a, 3b) mesh with four double helically geared, axially freely supported pinion shafts (4), each of which is common to one gear pair, and form with these a first stage of power distribution,
- **that** the four pinion shafts (4) of the first stage of power distribution are connected with four pinion shafts (6) of a second stage of power distribution,
- **that** the four pinion shafts (6) of the second stage of power distribution in turn bear one gear (7) each and two gears (7) form a gear pair,
- and **that** said gears (7) of one gear pair mesh with two freely supported pinion shafts, each of which is common to one gear pair.

2. Gear unit according to claim 1, **characterized in that**, in the second stage of power distribution, said gears (7) of one gear pair are provided with a helical gearing of different pitch direction and mesh with two double helically geared, axially freely supported pinion shafts, each of which is common to one gear pair, which serve as output shafts (8) or input shafts, respectively.

3. Gear unit according to claim 1, **characterized in that**, in the second stage of power distribution, said gears (7) of one gear pair mesh with two radially freely supported pinions (24), each of which is common to one gear pair, that said gears (7) of one gear pair are offset by 180° relative to one another and with reference to the coordinate axes of said pinion (24) and that said pinion (24) is connected with an output shaft (26) through a double-joint coupling (25).

4. Gear unit according to claim 3, **characterized in that** said gears (7) and the allocated pinion (24) are helically geared and that said pinion (24) is supported through a slightly blocked axial bearing (27).

5. Gear unit according to one of claims 1 to 4, **characterized in that** a spur gear stage (gears 5) is placed between the first and the second stage of power distribution for speed variation.

6. Gear unit according to one of claims 1 to 5, **characterized in that** said large gear (1) is connected with the shaft of the rotor of a wind power plant and that the two output shafts (8) are connected with one generator each.

7. Gear unit according to one of claims 1 to 6, **characterized in that** the gear unit is accommodated in a gear casing which is split by two parallel joints (11) and one inclined joint (12) and that four of the eight pinion shafts (2) of the first stage, the four common pinion shafts (4) of the first stage, the four pinion shafts (6) of the second stage and the two output shafts (8) are supported at both sides of the parallel joints (11), and large gear (1) and further two of the eight pinion shafts (2) of the first stage are supported at both sides of the inclined joint (12).

8. Gear unit according to one of claims 1 to 7, **characterized in that** output pinion shafts (8) mesh with a single output shaft (13) through a third stage of power distribution.

9. Gear unit according to claim 8, **characterized in that** on each of output pinion shafts (8) one gear (14) is arranged in which one gear (7) of pinion shaft (6) meshes, that on each output pinion shaft (8) one gear (15) is arranged, that between these gears (15) one gear (16) is floating on output pinion shafts (8), that the floating gear (16) is connected through a torsionally rigid angle balancing coupling (17) with one gear (18) in a torsionally rigid and variable-angle form and that this gear (18) meshes with a toothed pinion (19) which is arranged on output shaft (13) which rests in the gear casing.

10. Gear unit according to one of claims 1 to 9, **characterized in that** the support of pinion shafts (2) surrounding the large gear (1) is arranged in two opposed walls (20) of a casing which surrounds the gear unit, that casing walls (20) are designed as torque supports and have at the ends lateral recesses (21) in which coupling pieces (23) are arranged without play and in a removable form, which are connected with a separate base frame.

## Revendications

1. Engrenage à distribution interne de puissance, composé d'une grande roue dentée (1) reliée à un arbre d'entrée ou à un arbre de sortie et pourvue d'une denture extérieure, lequel engrenage est entouré de plusieurs arbres à pignon (2) dont les pignons dentés s'empeignent avec la grande roue dentée (1), les arbres à pignon (2) supportant chacun une roue dentée (3a, 3b) et deux roues dentées (3a, 3b) formant respectivement une paire de roues dentées et étant disposés alternativement devant et derrière la grande roue dentée (1), étant pourvus d'une denture oblique à sens d'inclinaison différent et étant en engrènement avec un arbre à pignon (4) commun à double denture oblique s'appuyant librement dans le sens axial, **caractérisé en ce que**
- la grande roue dentée (1) est entourée de huit arbres à pignon (2) dont les roues dentées (3a, 3b) sont en engrènement avec quatre arbres à pignon (4) à double denture oblique respectivement communs à une paire de roues dentées et s'appuyant librement dans le sens axial et constituent avec ceux-ci un premier niveau de distribution de puissance,
- les quatre arbres à pignon (4) du premier niveau de distribution de puissance sont en liaison avec quatre arbres à pignon (6) d'un deuxième niveau de distribution de puissance,
- les quatre arbres à pignon (4) du deuxième niveau de distribution de puissance supportent à leur tour chacun une roue dentée (7) et que deux roues dentées (7) forment une paire de roues dentées
- et que les roues dentées (7) d'une paire de roues dentées sont en engrènement avec deux arbres à pignon respectivement communs à une paire de roues dentées et s'appuyant librement.

2. Engrenage selon la revendication 1, **caractérisé en ce que**, dans le deuxième niveau de distribution de puissance, les roues dentées (7) d'une paire de roues dentées sont pourvues d'une denture oblique à sens d'inclinaison différent et sont en engrènement avec deux arbres à pignon à double denture oblique, communs respectivement à une paire de roues dentées, s'appuyant librement dans le sens axial et servant d'arbres de sortie (8) ou d'arbres d'entrée.

3. Engrenage selon la revendication 1, **caractérisé en ce que**, dans le deuxième niveau de distribution de puissance, les roues dentées (7) d'une paire de roues dentées sont en engrènement avec deux pignons (24) communs respectivement à une paire de roues dentées et s'appuyant librement dans le sens radial, que les roues dentées (7) d'une paire de roues dentées, par rapport au système d'axe du pignon (24), sont disposées avec un décalage de 180° entre elles et que le pignon (24) est relié par un accouplement à double articulation (25) à un arbre de sortie (26).

4. Engrenage selon la revendication 3, **caractérisé en ce que** les roues dentées (7) et le pignon (24) qui leur est associé sont dentés à l'oblique et que le pignon (24) est soutenu par un palier axial (27) exerçant une légère retenue.

5. Engrenage selon une des revendications 1 à 4, **caractérisé en ce qu'**entre le premier et le deuxième niveau de distribution de puissance, un niveau à roue droite (roues dentées 5) est disposé pour modifier la vitesse de rotation.

6. Engrenage selon une des revendications 1 à 5, **caractérisé en ce que** la grande roue dentée (1) est reliée à l'arbre de rotor du rotor d'une éolienne et que les deux arbres de sortie (8) sont reliés respectivement à un générateur.

7. Engrenage selon une des revendications 1 à 6, **caractérisé en ce que** l'engrenage est logé dans un carter d'engrenage divisé par deux rainures de division parallèles (11) et une rainure de division s'étendant à l'oblique (12) et que, des deux côtés des rainures de division parallèles (11), s'appuient quatre des huit arbres à pignon (2) du premier niveau, les quatre arbres à pignon communs (4) du premier niveau, les quatre arbres à pignon (6) du deuxième niveau et les deux arbres de sortie (8) et, des deux côtés des rainures de division obliques (12), la grande roue dentée (1) et deux autres des huit arbres à pignon (2) du premier niveau.

8. Engrenage selon une des revendications 1 à 7, **caractérisé en ce que** les arbres à pignon de sortie (8) sont en engrènement par l'intermédiaire d'un troisième niveau de ramification de puissance avec un seul arbre de sortie (13).

9. Engrenage selon la revendication 8, **caractérisé en ce que**, sur les arbres à pignon de sortie (8), est disposée respectivement une roue dentée (14) dans laquelle s'engrène respectivement une roue dentée (7) de l'arbre à pignon (6), qu'une roue dentée (15) est disposée sur chaque arbre à pignon de sortie (8), qu'entre ces roues dentées (15), sur les arbres à pignon de sortie (8), une roue dentée (16) est disposée de manière volante, que la roue dentée (16) disposée de manière volante est reliée de manière rigide en rotation par un accouplement d'équilibrage d'angle rigide en rotation (17) à une roue dentée (18) de manière rigide en rotation et mobile en angle et que cette roue dentée (18) s'engrène dans un pignon denté (19) qui est disposé sur l'arbre de sortie (13) s'appuyant dans le carter d'engrenage.

10. Engrenage selon une des revendications 1 à 9, **caractérisé en ce que** le palier des arbres à pignon (2) entourant la grande roue dentée (1) est disposé dans deux parois de carter opposées (20) d'un carter d'engrenage entourant l'engrenage, que les parois de carter (20) sont conçues sous forme de supports de couple de rotation et présentent latéralement à leurs extrémités des évidements (21) dans lesquels sont disposés sans jeu et avec possibilité de démontage des pièces d'engrenage (23) qui sont reliées à un châssis de base séparé.
